# EUROPEAN PATENT APPLICATION

(11) **EP 3 309 776 A1**
(43) Date of publication of application: **18.04.2018**
(21) Application number: 17167195.1
(22) Date of filing: 20.04.2017
(51) Int. Cl.: G09G 3/36, G06T 11/40

(54) **GRAPHICS PROCESSING APPARATUS AND METHOD OF EXECUTING INSTRUCTIONS**

(30) Priority: 05.10.2016 KR 20160128566
(71) Applicant: Samsung Electronics Co., Ltd., Gyeonggi-do 16677 (KR)
(72) Inventor: PARK, Jeong-ae, 04303 Seoul (KR); KWON, Kwon-taek, 18456 Hwaseong-si, Gyeonggi-do (KR); JANG, Choon-ki, 14017 Anyang-si, Gyeonggi-do (KR)
(74) Representative: Kuhnen & Wacker Patent- und Rechtsanwaltsbüro PartG mbB

(57) **Abstract**

A graphics processing apparatus and a method of executing instructions are disclosed where the method of executing an instruction includes receiving instructions, generating an output mask denoting a component that is output as a result of rendering, determining a common component included in an instruction mask and the output mask, and executing an instruction including the common component from among the instructions, wherein the instruction mask denotes a component that is affected by each of the instructions.

## Description

### CROSS-REFERENCE TO RELATED APPLICATION

This application claims the benefit of Korean Patent Application No. 10-2016-0128566, filed on October 5, 2016, in the Korean Intellectual Property Office, the entire disclosure of which is incorporated herein by reference for all purposes.

### BACKGROUND

### 1. Field

The present disclosure relates to a graphics processing apparatus and a method of executing instructions.

### 2. Description of Related Art

Examples of 3-dimensional graphics application program interface (API) standards include OpenGL, OpenGL ES, Vulkan by Khronos, and Direct 3D by Microsoft. API standards include a method of performing rendering for each frame and displaying an image. When rendering for each frame is performed, many calculations are executed and much computing power is consumed. It is desirable to reduce the computational amount and the number of memory accesses when performing rendering.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a method of executing an instruction, the method including receiving instructions, generating an output mask representing a component that is output as a result of rendering, determining a common component included in an instruction mask and the output mask, and executing an instruction including the common component from among the instructions, wherein the instruction mask represents a component that is affected by each of the instructions.

The generating of the output mask may include generating an output mask for each pixel depending on components that are applied to each pixel of a display device.

The generating of the output mask may include generating an output mask that denotes a pixel of the display device to which a red component and a green component are applied and a pixel of the display device to which a green component and a blue component are applied.

The generating of the output mask may include generating an output mask that represents components to be rendered from among components of a pixel, based on coverage of the pixel when rendering the pixel using a subpixel rendering method.

The executing of the instruction may include executing an instruction that has an influence on another instruction including the common component, in response to the instruction not including the common component.

The executing of the instruction may include executing an instruction including the common component, and skipping an instruction not including the common component.

The generating of the output mask may include generating an output mask for each pixel within same draw context.

The components may include a red component, a blue component, a green component, a transparency component, and a depth component.

In another general aspect, there is provided a graphics processing unit (GPU) for executing an instruction, the GPU including a memory, and a processor configured to receive instructions, to generate an output mask representing a component that is output as a result of rendering, to determine a common component included in an instruction mask and the output mask, and to execute an instruction including the common component from among the instructions, wherein the instruction mask represents a component that is affected by each of the instructions.

The processor may be configured to generate an output mask for each pixel depending on components that are applied to each pixel of a display device.

The processor may be configured to generate an output mask that denotes a pixel of the display device to which a red component and a green component are applied, and a pixel of the display device to which a green component and a blue component are applied.

The processor may be configured to generate an output mask that represents components to be rendered from among components of a pixel, based on coverage of the pixel when rendering the pixel by using a subpixel rendering method.

The processor may be configured to execute an instruction that has an influence on another instruction including the common component, in response to the instruction not including the common component.

The processor may be configured to execute an instruction including the common component and skip an instruction not including the common component.

The processor may be configured to generate an output mask for each pixel within same draw context.

The output mask may correspond to a valid component for a pixel in a frame buffer.

In another general aspect, there is provided a digital device including a display, a memory configured to store instructions and data to be displayed on the display, and a processor configured to to receive instructions, to generate an output mask denoting a component that is output on the display as a result of rendering, to determine a common component included in an instruction mask and the output mask, and to execute an instruction including the common component from among the instructions, wherein the instruction mask denotes a component that is affected by each of the instructions.

Other features and aspects will be apparent from the following detailed description, the drawings, and the claims.

### BRIEF DESCRIPTION OF DRAWINGS

FIG. 1 is a diagram illustrating an example of processing a three-dimensional (3D) image.
FIG. 2 is a diagram illustrating an example of a computing apparatus.
FIG. 3 is a diagram illustrating an example of a method in which a graphics processing unit (GPU) executes an instruction.
FIG. 4 is a diagram illustrating an example of a method of executing an instruction based on a display device.
FIG. 5 is a diagram illustrating an example of an output mask that is applied to a PenTile display device.
FIG. 6 is a diagram illustrating an example of a PenTile display device.
FIG. 7 is a diagram illustrating an example of a method of determining whether an instruction is executed, based on an instruction mask and an output mask.
FIG. 8 is a diagram illustrating an example of a method of determining an instruction that is not executed.
FIG. 9 is a diagram illustrating an example of a method of determining an instruction that is not executed.
FIG. 10 is a diagram illustrating an example of a method of executing an instruction based on a rendering method.
FIG. 11 is a diagram illustrating an example of a method of generating an output mask depending on subpixel rendering.
FIG. 12 is a diagram illustrating an example of a method in which a GPU executes an instruction.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

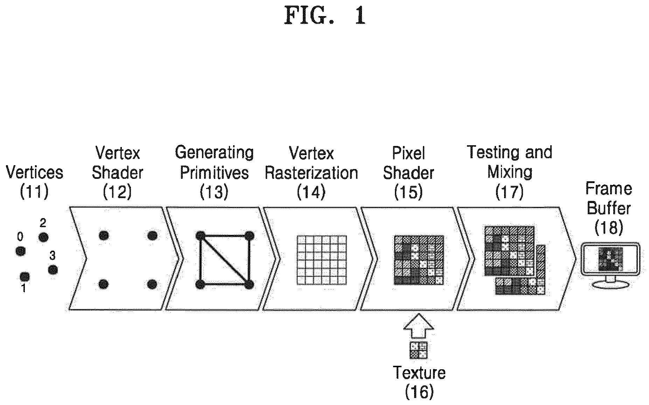

FIG. 1 is a diagram illustrating an example of a process of processing a three-dimensional (3D) image. Referring to FIG. 1, the process of processing a 3D image includes operations 11 through 17. Operations 11 through 13 are geometry processing operations, and operations 14 through 17 are pixel processing operations.

Operation 11 is an operation of generating vertices indicating an image. The vertices are generated to indicate objects included in the image.

Operation 12 is an operation of shading the generated vertices. A vertex shader may perform vertex shading by defining colors of the vertices generated in operation 11.

Operation 13 is an operation of generating primitives. A primitive denotes a point, a line, or a polygon formed by vertices. For example, a primitive may denote a triangle formed by connecting vertices.

Operation 14 is an operation of rasterizing primitives. Rasterizing a primitive denotes dividing the primitive into a plurality of fragments. A fragment is a unit constituting a primitive, and may be a basic unit for performing an image processing. The primitive includes only information regarding vertices. Accordingly, interpolation is performed when generating fragments between vertices in an operation of rasterizing the primitive

Operation 15 is an operation of shading pixels. In FIG. 1, shading is performed in pixel units. However, shading may also be performed in fragment units. For example, shading a pixel or a fragment denotes defining a color of the pixel or the fragment.

Operation 16 is an operation of texturing a pixel or fragment. Texturing is an operation of using a previously generated image when defining a color of a pixel or a fragment. For example, shading performs, through calculation, whether to designate any color to a fragment, but texturing is an operation of designating a color, which is the same as a color of a previously generated image, to a fragment corresponding to the previously generated image.

In operation 15 or 16, many calculations are required to shade or texture each pixel or fragment. Accordingly, it is beneficial to reduce the amount of computational by efficiently performing the shading operation or the texturing operation. A hidden surface removal (HSR) method is a representative method that reduces the amount of calculation in a shading process. The HSR method is a method in which shading is not performed on an object covered by another object positioned in front of the object.

Operation 17 is a testing and mixing operation.

Operation 18 is an operation of displaying a frame stored in a frame buffer. A frame generated through operations 11 through 17 is stored in a frame buffer. The frame stored in the frame buffer is displayed through a display device.

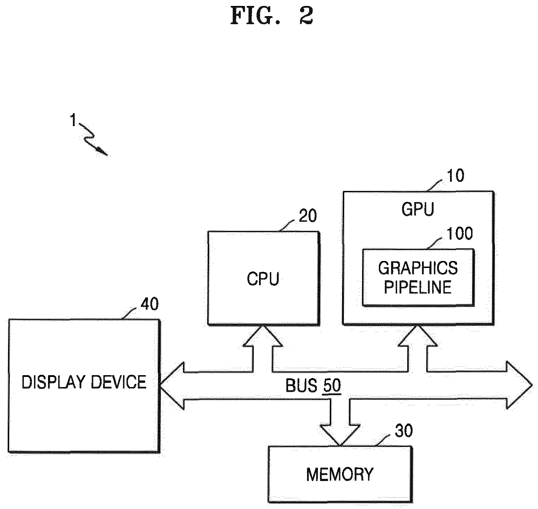

FIG. 2 is a diagram illustrating an example of a computing apparatus 1.

Referring to FIG. 2, in an example, the computing apparatus 1 includes a graphics processing unit (GPU) 10, a central processing unit (CPU) 20, a memory 30, a display device 40, and a bus 50. While components related to the present example are illustrated in the computing apparatus 1 of FIG. 2, it is understood that those skilled in the art may include other general components.

As a non-exhaustive illustration only, the computing apparatus 1 may embedded in or interoperate with various digital devices such as, for example, an intelligent agent, a mobile phone, a cellular phone, a smart phone, a wearable smart device (such as, for example, a ring, a watch, a pair of glasses, glasses-type device, a bracelet, an ankle bracket, a belt, a necklace, an earring, a headband, a helmet, a device embedded in the cloths), a personal computer (PC), a laptop, a notebook, a subnotebook, a netbook, or an ultra-mobile PC (UMPC), a tablet personal computer (tablet), a phablet, a mobile internet device (MID), a personal digital assistant (PDA), an enterprise digital assistant (EDA), a digital camera, a digital video camera, a portable game console, an MP3 player, a portable/personal multimedia player (PMP), head mounted display (HMD) device, a handheld e-book, an ultra mobile personal computer (UMPC), a portable lab-top PC, a global positioning system (GPS) navigation, a personal navigation device or portable navigation device (PND), a handheld game console, an e-book, and devices such as a high definition television (HDTV), an optical disc player, a DVD player, a Blue-ray player, a setup box, robot cleaners, a home appliance, content players, communication systems, image processing systems, graphics processing systems, other consumer electronics/information technology(CE/IT) device, or any other device capable of wireless communication or network communication consistent with that disclosed herein. In another example, the computing apparatus 1 may be implemented in a smart appliance, an intelligent vehicle, an apparatus for automatic driving, a smart home environment, a smart building environment, a smart office environment, office automation, a smart electronic secretary system, or various other Internet of Things (IoT) devices that are controlled through a network. That is, the computing apparatus 1 is a device having a graphics processing function for display of contents and various devices may be further included in the computing apparatus 1 or the computing apparatus may be incorporated in various other devices..

In an example, the CPU 20 is hardware that controls overall operations and functions of the computing apparatus 1. For example, the CPU 20 may drive an operating system (OS), invoke a graphics application programming interface (API) for the GPU 10, and execute a driver of the GPU 10. Also, the CPU 20 may execute various applications stored in the memory 30, such as a web-browsing application, a game application, and a video application.

In addition, the CPU 20 may execute a compiler stored in the memory 30. The compiler may convert a command received from an application into an instruction that is executed by the GPU 10. The compiler outputs instructions to the GPU 10. The compiler may generate an instruction mask for each of the instructions. The instruction mask denotes a component that is influenced by an instruction. A generated instruction mask is output to the GPU 10. The instruction mask may be generated by the CPU 20, a compiler, the GPU 10, and a rasterizer. In an example, the rasterizer may be implemented with hardware performing a fixed function.

The GPU 10 is a device that performs a graphics pipeline 100, and may correspond to a dedicated graphic processor. The GPU 10 may be hardware configured to execute a 3-dimensional (3D) graphics pipeline in order to render 3D objects on a 3D image into a 2D image for display. For example, the GPU 10 may perform various functions, such as shading, blending, and illuminating, and may perform various functions for generating pixel values of pixels to be displayed. The GPU 10 may also perform a tile-based graphics pipeline for tile-based rendering (TBR).

The GPU 10 may include at least one processor. The processor may perform various operations according to programs. The GPU 10 may further include hardware performing a specified operation, such as, for example, a rasterizer, or a shader.

Referring to FIG. 2, the graphics pipeline 100 that is processed by the GPU 10 may correspond to a graphics pipeline defined by any one of graphics APIs, such as various versions of DirectX or OpenGL API. In other words, the graphics pipeline 100 is not limited to one version or one type of API and may be applied to various APIs.

The memory 30 is hardware that stores various types of data processed by the computing apparatus 1, and may store data processed or to be processed by the GPU 10 and the CPU 20. Also, the memory 30 may store applications and drivers to be driven by the GPU 10 and the CPU 20. In an example, the memory 30 includes random access memory (RAM), such as dynamic random access memory (DRAM) or static random access memory (SRAM), read-only memory (ROM), electrically erasable programmable read-only memory (EEPROM), a CD-ROM, a Blu-ray or another optical disk storage, a hard disk drive (HDD), a solid state drive (SSD), or a flash memory. In an example, the memory 30 includes an external storage device accessible by the computing apparatus 1. Other non-exhaustive examples of the memory 30 are described below.

The memory 30 may include a frame buffer, and the frame buffer may store images to be output to the display device 40.

The display device 40 is hardware that displays an image processed by the GPU 10. The display device 40 includes screen pixels having predetermined resolution, and the GPU 10 renders an image corresponding to the predetermined resolution. The display device 40 is implemented with various types of display panels, such as, for example, a liquid crystal display (LCD), a thin film transistor (TFT-LCD) display, a light emitting diode (LED) display, an active matrix OLED (AMOLED) display, an organic light-emitting diode (OLED), a flexible display, or a plasma display panel (PDP). For example, the display device 40 may be a PenTile display device. One pixel of the PenTile display device may include only some of all components. Examples of the components may include R, G, B, and A. R is a red component (or a red channel), G is a green component (or a green channel), B is a blue component (or a blue channel), and A is an alpha component (or an alphas channel). R, G, and B denote colors, and A denotes transparency. For example, a first pixel of the PenTile display device may include a red component and a green component, and a second pixel of the PenTile display device may include a green component and a blue component. A depth component may also be an example of the components.

The bus 50 is hardware that connects other pieces of hardware in the computing apparatus 1, such as, for example, a peripheral component interconnect (PCI) bus or a PCI express bus. The bus 50 ensures that other pieces of hardware transmit or receive data to or from each other.

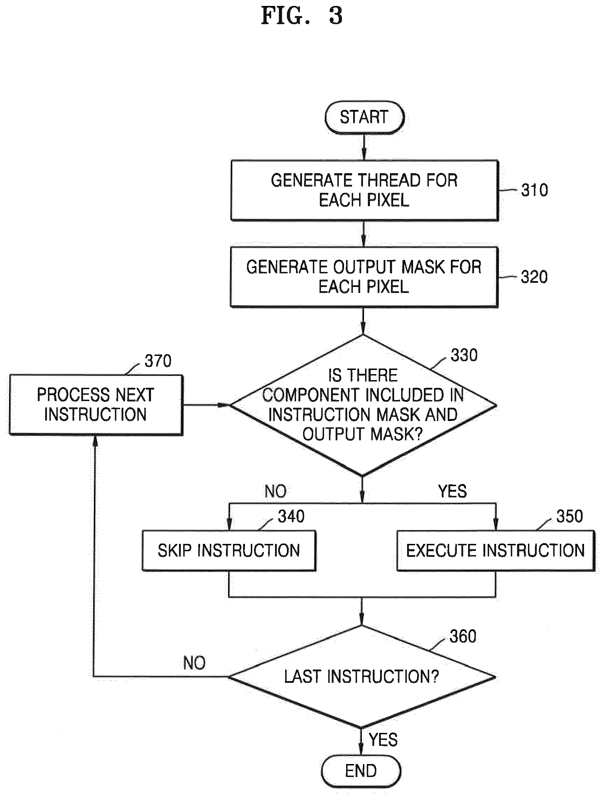

FIG. 3 is a diagram illustrating an example of a method in which the GPU 10 executes an instruction, according to an embodiment. The operations in FIG. 3 may be performed in the sequence and manner as shown, although the order of some operations may be changed or some of the operations omitted without departing from the spirit and scope of the illustrative examples described. Many of the operations shown in FIG. 3 may be performed in parallel or concurrently. One or more blocks of FIG. 3, and combinations of the blocks, can be implemented by special purpose hardware-based computer that perform the specified functions, or combinations of special purpose hardware and computer instructions. In addition to the description of FIG. 3 below, the above descriptions of FIGS. 1-2, are also applicable to FIG. 3, and are incorporated herein by reference. Thus, the above description may not be repeated here.

Referring to FIG. 3, the GPU 10 may execute only an instruction including a common component. The common component is a component included in an instruction mask and an output mask. In 310, the GPU 10 generates a thread for each pixel. For example, the GPU 10 may generate a pixel shading thread. One thread is generated for one pixel. Each thread may execute an instruction for each pixel.

In 320, the GPU 10 generates an output mask for each pixel. The output mask denotes components that are applied to an image to be displayed. In other words, the output mask denotes a valid component for a pixel in a frame buffer. The output mask may be generated for each pixel. The output mask may be generated by a rasterizer or a pixel shader.

The output mask may be generated depending on characteristics of the display device 40. In an example embodiment, in a PenTile display device, a color component is designated for each pixel. The GPU 10 generates an output mask including a color component designated for each pixel.

In another example, the output mask is generated depending on a method in which an image is displayed. In an example, the GPU 10 generates an image using a subpixel rendering method. The GPU 10 generates coverage with respect to pixels, in which a curve is included, when rasterizing the curve, and may designate a color component, in which there is coverage, as the output mask. The coverage denotes a color component through which a curve passes from among color components occupying one pixel.

In 330, the GPU 10 determines whether there is a component included in the instruction mask and the output mask. The GPU 10 may determine a component, included in common in the instruction mask and the output mask, as a common component. For example, when the instruction mask is RXXX and the output mask is RGXX, the GPU 10 determines R as a common component.

In 340, the GPU 10 skips an instruction that does not include a common component. Skipping an instruction denotes that the GPU 10 does not execute an instruction.

In 350, the GPU 10 executes an instruction including a common component. The GPU 10 also executes instruction that does not include a common component, if a result of the execution of the instruction has an influence on another instruction including a common component.. Accordingly, the GPU 10 may execute an instruction including a common component and an instruction having an influence on the instruction including a common component.

In 360, the GPU 10 determines whether an instruction that is currently processed is a last instruction. If the instruction that is currently processed is a last instruction, the GPU 10 ends an operation. If the instruction that is currently processed is not a last instruction, the GPU 10 proceeds to operation 370.

In 370, the GPU 10 processes a next instruction.

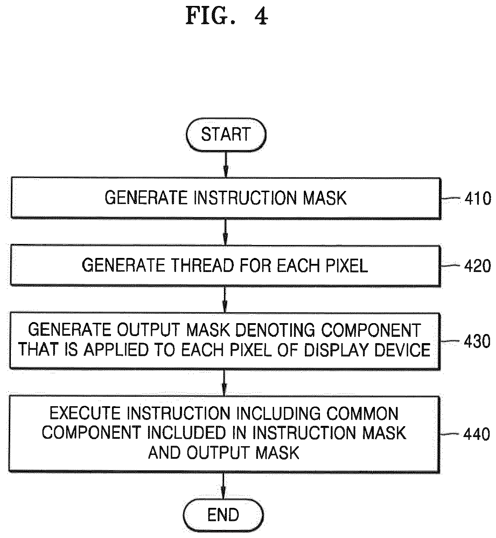

FIG. 4 is a diagram illustrating an example of a method of executing an instruction based on a display device. The operations in FIG. 4 may be performed in the sequence and manner as shown, although the order of some operations may be changed or some of the operations omitted without departing from the spirit and scope of the illustrative examples described. Many of the operations shown in FIG. 4 may be performed in parallel or concurrently. One or more blocks of FIG. 4, and combinations of the blocks, can be implemented by special purpose hardware-based computer that perform the specified functions, or combinations of special purpose hardware and computer instructions. In addition to the description of FIG. 4 below, the above descriptions of FIGS. 1-3, are also applicable to FIG. 4, and are incorporated herein by reference. Thus, the above description may not be repeated here.

In 410, the GPU 10 generates an instruction mask. In an example, components that are applied to instructions are different from each other. The GPU 10 generates an instruction mask including only a component needed for an instruction. The GPU 10 may generate an instruction mask for each instruction.

In 420, the GPU 10 generates a thread for each pixel.

In 430, the GPU 10 generates an output mask denoting a component that is applied to each pixel of the display device 40. Color components that are applied to pixels may be different from each other depending on the display device 40. For example, when the display device 40 is a PenTile display device, a first pixel may use a red component and a green component, and a second pixel may use a green component and a blue component. Accordingly, when the GPU 10 generates an output mask for each pixel, the GPU 10 generates an output mask corresponding to RGXX with respect to the first pixel and generates an output mask corresponding to XGBX with respect to the second pixel. The first pixel is a pixel adjacent to the second pixel.

In 440, the GPU 10 executes an instruction including a common component included in an instruction mask and an output mask. The GPU skips and does not execute an instruction that does not include a common component. When an instruction mask and an output mask are generated, the GPU 10 classifies instructions into instructions to be executed and instructions to be not executed.

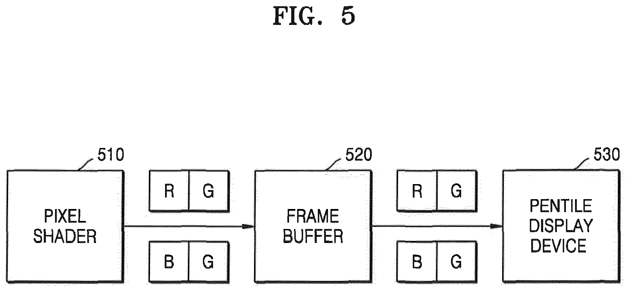

FIG. 5 is a diagram illustrating an example of an output mask that is applied to a PenTile display device 530. Referring to FIG. 5, a pixel shader 510 may execute only an instruction for a component that is applied to each pixel of the PenTile display device 530.

The pixel shader 510 renders each pixel. The pixel shader 510 may generate a thread for each pixel, and the thread may render each pixel.

The pixel shader 510 generates an output mask based on color components that are applied to each pixel of the PenTile display device 530. Since all color components are not applied to each pixel of the PenTile display device 530, the pixel shader 510 does not execute instructions for all color components. Accordingly, the pixel shader 510 may store result values for color components that are needed when storing a rendered result to a frame buffer 520.

For example, the PenTile display device 530 may include a pixel to which only R and G components are applied, and a pixel to which only B and G components are applied. The pixel shader 510 executes only an instruction having an influence on R and G components or executes only an instruction having an influence on B and G components, depending on a pixel to which an instruction is applied. When only R and G components are applied to a first pixel, the pixel shader 510 executes only an instruction having an influence on R and G components from among instructions for the first pixel, and stores a result value to the frame buffer 520.

In an example, blending and depth/stencil test is performed before an output value of the pixel shader 510 is stored in the frame buffer 520. However, the blending and the depth/stencil test are not described for convenience.

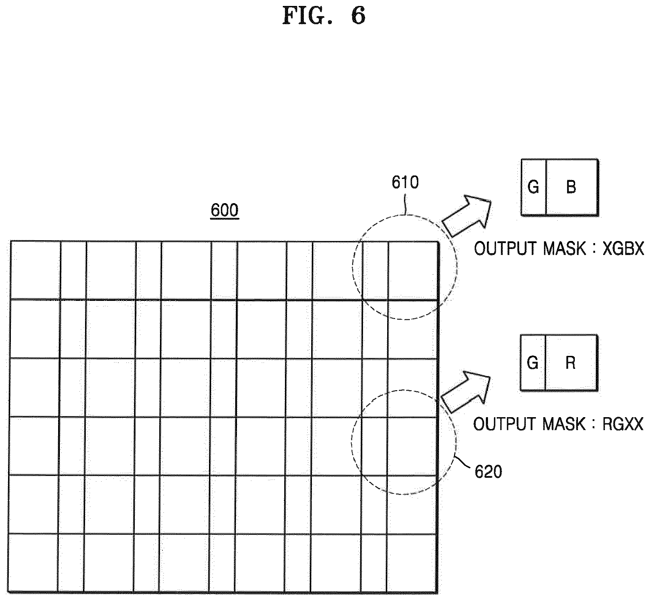

FIG. 6 is a diagram illustrating an example of a PenTile display device 600.

Referring to FIG. 6, the PenTile display device 600 includes two types of pixels. A first pixel 610 includes only G and B components. Accordingly, an output mask for the first pixel 610 is XGBX. A second pixel 620 includes only G and R components. Accordingly, an output mask for the second pixel 620 is RGXX.

The PenTile display device 600 is configured in a form in which the first pixel 610 and the second pixel 620 are alternately repeated. Accordingly, R, G, B, and G components are repeated in this stated order. However, the G component occupies a relatively small area, compared to the R and B components.

The pixel shader 510 generates an output mask for each of the first and second pixels 610 and 620, based on color components that constitute the first pixel 610 and the second pixel 620. The pixel shader 510 uses the output mask XGBX for the first pixel 610 when rendering the first pixel 610, and uses the output mask RGXX for the second pixel 620 when rendering the second pixel 620.

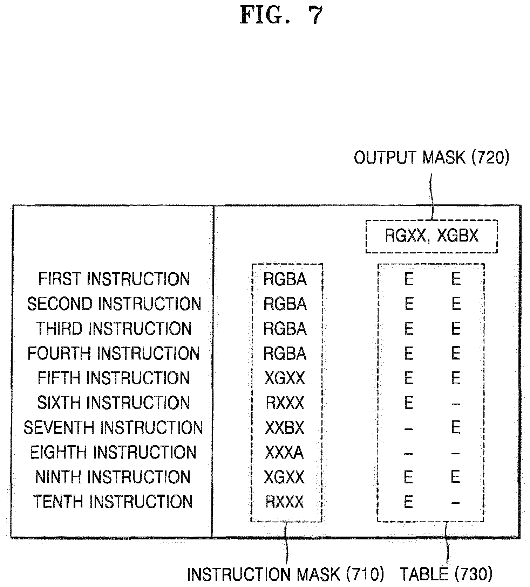

FIG. 7 is a diagram illustrating an example of a method of determining whether an instruction is executed, based on an instruction mask and an output mask. FIG. 7 illustrates, as an example, whether first through tenth instructions are executed.

An instruction mask 710 denotes a component for each of the first through tenth instructions. For example, an instruction mask of the first instruction is RGBA, and an instruction mask of the tenth instruction is RXXX. Here, X denotes a component that does not have an influence on an instruction. Accordingly, the tenth instruction has an influence on an R component.

An output mask 720 denotes a component that is applied depending on the display device 40. For example, the output mask 720 may be RGXX or XGBX.

A table 730 is generated based on the instruction mask 710 and the output mask 720. The table 730 indicates whether an instruction is executed. "E" indicates that an instruction is executed, and "-" indicates that an instruction is not executed and is skipped.

For example, the first instruction is executed with respect to both RGXX and XGBX of the output mask 720. The sixth instruction is executed when RGXX of the output mask 720 is applied, but is not executed when XGBX of the output mask 720 is applied. The eighth instruction is not executed with respect to both RGXX and XGBX of the output mask 720.

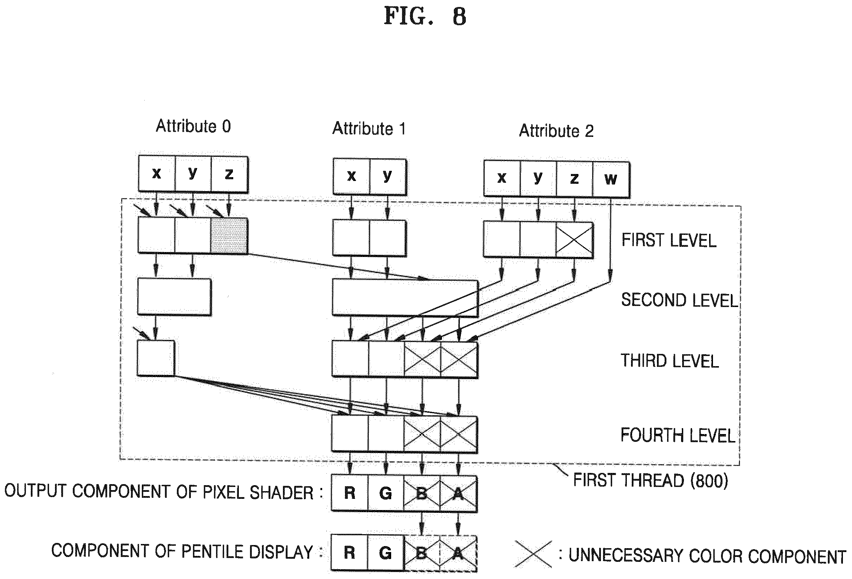

FIG. 8 is a diagram illustrating an example of a method of determining an instruction that is not executed. Referring to FIG. 8, a first thread 800 may skip instructions indicated by x without executing the instructions indicated by x. An attribute denotes an input variable. Attribute 0 includes x, y, and z as input variable, Attribute 1 includes x and y as input variables, and Attribute 2 includes x, y, z, and w as input variable.

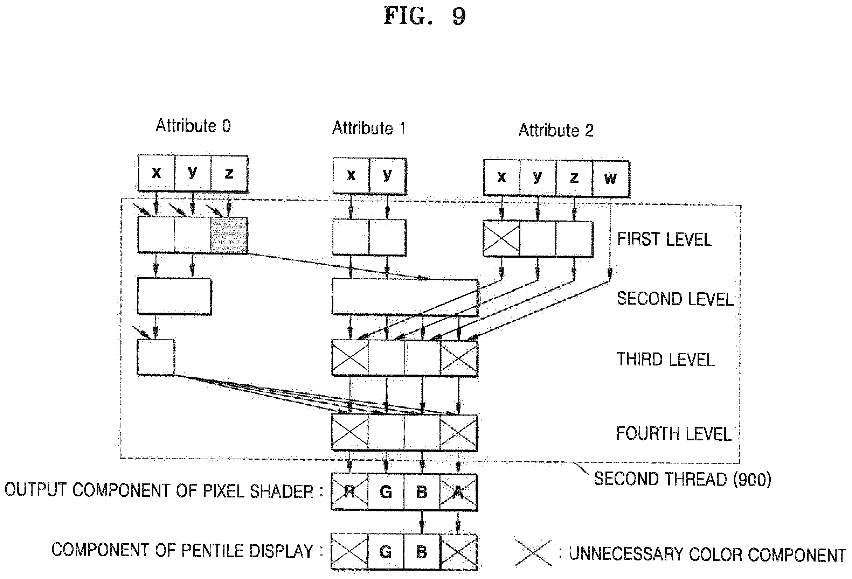

A tetragon in the first thread 800 denotes an instruction. An output component of a pixel shader may be an R, G, B, or A component. The first thread 800 is generated depending on a result obtained by rasterizing a primitive. The first thread 800 of FIG. 8 may render a first pixel, and a second thread 900 of FIG. 9 may render a second pixel.

In FIG. 8, a component of a PenTile display device is an R or G component. In FIG. 9, a component of a PenTile display device is a G or B component.

As shown in FIG. 8, when the display device 40 is a PenTile display device, a component of a PenTile display device may be an R or G component. In this case, B and A components are unnecessary components, and the pixel shader does not have to render B and A components. Accordingly, the first thread 800 identifies an instruction including only a B or A component and does not execute the instruction including only a B or A component.

In an example, the first thread 800 inversely searches for instructions including only a B or A component and determine an unnecessary instruction from among the instructions including only a B or A component. The first thread 800 excludes two instructions (tetragons indicated by X in a fourth level) including only a B or A component from among instructions of the fourth level. Also, the first thread 800 excludes two instructions including only a B or A component from among instructions of a third level. Since one of two instructions in a second level includes R and G components and the other of the two instructions includes R, G, B, and A components, the two instructions of the second level are not excluded. In a first level, among instructions for Attribute 2, only an instruction including only a B component is excluded. Accordingly, in the embodiment of FIG. 8, the first thread 800 may skip five instructions.

Even if an instruction does not include a common component, the first thread 800 does not skip and executes the instruction if the instruction is an instruction having an influence on another instruction. For example, although a third instruction (a shaded tetragon) of the first level of Attribute 0 is an instruction including only a B component, the third instruction is not skipped since the third instruction is an instruction having an influence on a second instruction of the second level.

FIG. 9 is a diagram illustrating an example of a method of determining an instruction that is not executed.

In FIG. 9, a component of a PenTile display device is a G or B component. In other words, only G and B components are applied to a second pixel. Accordingly, R and A components are not needed, and a pixel shader does not have to render R and A components. Accordingly, the second thread 900 identifies an instruction including only an R or A component and does not execute the instruction including only an R or A component.

In an example, the second thread 900 inversely searches for instructions including only an R or A component and determine an unnecessary instruction from among the instructions including only an R or A component. The second thread 900 excludes two instructions (tetragons indicated by X in a fourth level) including only an R or A component from among instructions of the fourth level. Also, the second thread 900 excludes two instructions including only an R or A component from among instructions of a third level. Since one of two instructions in a second level includes R and G components and the other of the two instructions includes R, G, B, and A components, the two instructions of the second level are not excluded. In a first level, among instructions for Attribute 2, only an instruction including only an R component is excluded. Accordingly, in the embodiment of FIG. 9, the second thread 900 may skip five instructions.

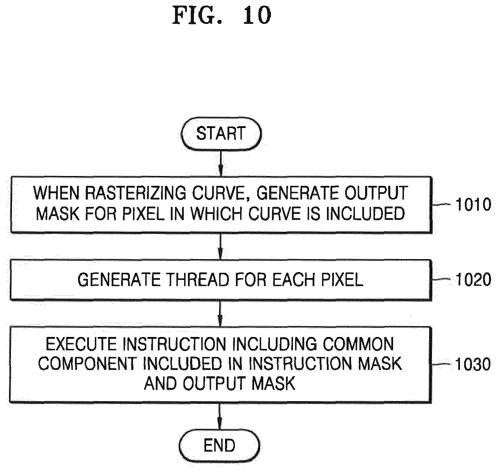

FIG. 10 is a diagram illustrating an example of a method of executing an instruction based on a rendering method. The operations in FIG. 10 may be performed in the sequence and manner as shown, although the order of some operations may be changed or some of the operations omitted without departing from the spirit and scope of the illustrative examples described. Many of the operations shown in FIG. 10 may be performed in parallel or concurrently. One or more blocks of FIG. 10, and combinations of the blocks, can be implemented by special purpose hardware-based computer that perform the specified functions, or combinations of special purpose hardware and computer instructions. In addition to the description of FIG. 10 below, the above descriptions of FIGS. 1-9, are also applicable to FIG. 10, and are incorporated herein by reference. Thus, the above description may not be repeated here. When the GPU 10 performs rendering depending on a subpixel rendering method, the GPU 10 may execute an instruction depending on whether each component included in a pixel is included in a curve.

In 1010, when rasterizing the curve, the GPU 10 generates an output mask for a pixel in which a curve is included. The GPU 10 distinguishes a component which is included in the curve from a component which is not included in the curve in the pixel in which the curve is included. The GPU 10 generates an output mask including only a component included in the curve. For example, when one pixel includes R, G, and B components and a curve passes through only an area for the R component from among areas for the R, G, and B components, the GPU 10 generates an output mask including only the R component. The GPU 10 may generate different output masks with respect to pixels.

In 1020, the GPU 10 generates a thread for each pixel. The thread may perform rendering for each pixel using the output mask generated in operation 1010.

In 1030, the thread generated by the GPU 10 executes only an instruction including a common component included in an instruction mask and an output mask. The instruction mask is generated depending on an instruction. For example, when the instruction mask is RGXX and the output mask is RXXX, the thread executes an instruction. However, when the instruction mask is XGXX and the output mask is RXXX, the thread skips an instruction.

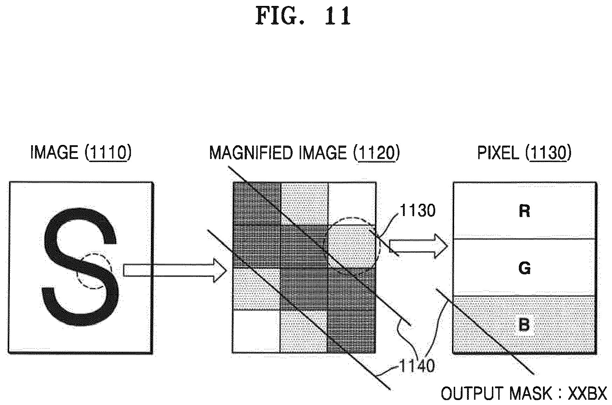

FIG. 11 is a diagram illustrating an example of a method of generating an output mask depending on subpixel rendering. Referring to FIG. 11, the GPU 10 may generate an output mask including a component through which a curve passes.

An image 1110 includes a character S. A magnified image 1120 is an image in which a portion of the image 111 has been magnified. A curve 1140 passes through a plurality of pixels. However, since the curve 1140 passes through only a portion of the pixel 1130, the GPU 10 may render only some of components of the pixel 1130 when rendering the pixel 1130. As shown in FIG. 11, the curve 1140 passes through only a region of a B component. Accordingly, the GPU 10 renders only the B component when rendering the pixel 1130. The GPU 10 generates XXBX as an output mask for the pixel 1130 and applies XXBX as the output mask for the pixel 1130 when performing shading.

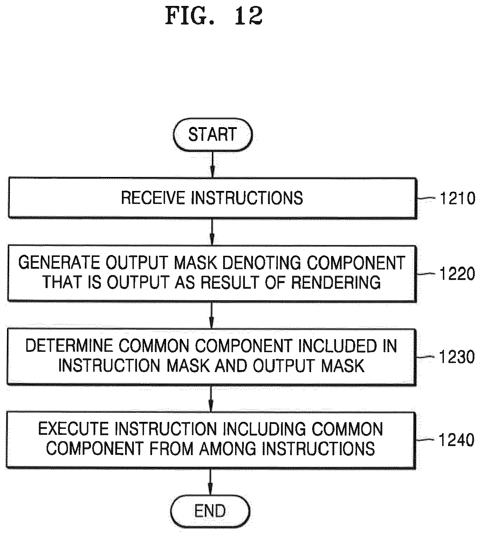

FIG. 12 is a diagram illustrating an example of a method in which a GPU executes an instruction. The operations in FIG. 12 may be performed in the sequence and manner as shown, although the order of some operations may be changed or some of the operations omitted without departing from the spirit and scope of the illustrative examples described. Many of the operations shown in FIG. 12 may be performed in parallel or concurrently. One or more blocks of FIG. 12, and combinations of the blocks, can be implemented by special purpose hardware-based computer that perform the specified functions, or combinations of special purpose hardware and computer instructions. In addition to the description of FIG. 12 below, the above descriptions of FIGS. 1-11, are also applicable to FIG. 12, and are incorporated herein by reference. Thus, the above description may not be repeated here.

In 1210, the GPU 10 receives instructions. A compiler generates the instructions and outputs the instructions to the GPU 10.

In 1220, the GPU 10 generates an output mask denoting a component that is output as a result of rendering. In an example, the GPU 10 generates an output mask depending on an attribute of the display device 40 or a rendering method.

In 1230, the GPU 10 determines a common component included in an instruction mask and an output mask. The GPU 10 identifies an instruction mask that is applied for each instruction. The GPU 10 identifies an output mask that is applied for each pixel. A plurality of instructions may be executed with respect to one pixel. The instruction mask denotes a component that is influenced by each instruction.

In 1240, the GPU 10 executes an instruction including a common component from among instructions. The GPU 10 does not execute an instruction that does not include a common component. However, the GPU 10 does not skip an instruction having an influence on another instruction even if the instruction is an instruction that does not include a common component. The GPU 10 outputs only a result for a common component as a result of the execution of an instruction. Threads generated in the same draw context may execute an instruction based on different common components, and the threads may output results for different components. In other words, the pixel shader 510 may adjust the types and number of components that are selectively output depending on the threads. For example, a first thread may output a result for R and G components, and a second thread may output a result for G, B, and A components. Draw context is an example of a format that is used while rendering one frame.

The apparatuses, units, modules, devices, and other components that perform the operations described in this application are implemented by hardware components. Examples of hardware components include controllers, sensors, generators, drivers, and any other electronic components known to one of ordinary skill in the art. In one example, the hardware components are implemented by one or more processors or computers. Examples of hardware components that may be used to perform the operations described in this application where appropriate include controllers, sensors, generators, drivers, memories, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application.. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 3-4, 10, and 12 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

For the simplicity of the specification, descriptions of electronic configurations of the related art, control systems, software, and other functional aspects may be omitted. Also, the connections of lines and connection members between constituent elements depicted in the drawings are examples of functional connection and/or physical or circuitry connections, and thus, in practical devices, may be expressed as replacable or additional functional connections, physical connections, or circuitry connections.

In the specification and the claims, the words describing relative spatial relationships, such as "below", "beneath", "under", "lower", "bottom", "above", "over", "upper", "top", "left", and "right", may be used to conveniently describe spatial relationships of one device or elements with other devices or elements. It will be understood that the spatially relative terms are intended to encompass different orientations of the device in use or operation in addition to the orientation depicted in the figures. For example, if the device in the figures is turned over, elements described as "above," or "upper" other elements would then be oriented "below," or "lower" the other elements or features. Thus, the term "above" can encompass both the above and below orientations depending on a particular direction of the figures. The device may be otherwise oriented (rotated 90 degrees or at other orientations) and the spatially relative descriptors used herein may be interpreted accordingly.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A method of executing an instruction, the method comprising:
receiving instructions;
generating an output mask representing a component that is output as a result of rendering;
determining a common component included in an instruction mask and the output mask; and
executing an instruction including the common component from among the instructions,
wherein the instruction mask represents a component that is affected by each of the instructions.

2. The method of claim 1, wherein the generating of the output mask comprises generating an output mask for each pixel depending on components that are applied to each pixel of a display device.

3. The method of claim 2, wherein the generating of the output mask comprises generating an output mask that denotes a pixel of the display device to which a red component and a green component are applied and a pixel of the display device to which a green component and a blue component are applied.

4. The method of claim 1, wherein the generating of the output mask comprises generating an output mask that represents components to be rendered from among components of a pixel, based on coverage of the pixel when rendering the pixel using a subpixel rendering method.

5. The method of claim 1, wherein the executing of the instruction comprises executing an instruction that has an influence on another instruction including the common component, in response to the instruction not including the common component.

6. The method of claim 5, wherein the executing of the instruction comprises:
executing an instruction including the common component; and
skipping an instruction not including the common component.

7. The method of claim 1, wherein the generating of the output mask comprises generating an output mask for each pixel within same draw context.

8. The method of claim 1, wherein the components comprise a red component, a blue component, a green component, a transparency component, and a depth component.

9. A non-transitory computer-readable recording medium storing instructions that, when executed by a processor, causes the processor to perform the method of claim 1.

10. A graphics processing unit (GPU) for executing an instruction, the GPU comprising:
a memory; and
a processor configured to receive instructions, to generate an output mask representing a component that is output as a result of rendering, to determine a common component included in an instruction mask and the output mask, and to execute an instruction including the common component from among the instructions,
wherein the instruction mask represents a component that is affected by each of the instructions.

11. The GPU of claim 10, wherein the processor is further configured to generate an output mask for each pixel depending on components that are applied to each pixel of a display device.

12. The GPU of claim 11, wherein the processor is further configured to generate an output mask that denotes a pixel of the display device to which a red component and a green component are applied, and a pixel of the display device to which a green component and a blue component are applied.

13. The GPU of claim 10, wherein the processor is further configured to generate an output mask that represents components to be rendered from among components of a pixel, based on coverage of the pixel when rendering the pixel by using a subpixel rendering method.

14. The GPU of claim 10, wherein the processor is further configured to execute an instruction that has an influence on another instruction including the common component, in response to the instruction not including the common component.

15. The GPU of claim 14, wherein the processor is further configured to execute an instruction including the common component and skip an instruction not including the common component.

16. The GPU of claim 10, wherein the processor is further configured to generate an output mask for each pixel within same draw context.

17. The GPU of claim 10, wherein the output mask corresponds to a valid component for a pixel in a frame buffer.

18. A digital device comprising:
a display;
a memory configured to store instructions and data to be displayed on the display; and
a processor configured to receive instructions, to generate an output mask denoting a component that is output on the display as a result of rendering, to determine a common component included in an instruction mask and the output mask, and to execute an instruction including the common component from among the instructions, wherein the instruction mask denotes a component that is affected by each of the instructions.
